Europäisches Patentamt

(19) European Patent Office

Office européen des brevets

(11) **EP 0 784 153 A2**

(12) **EUROPEAN PATENT APPLICATION**

(43) Date of publication:
16.07.1997 Bulletin 1997/29

(51) Int. Cl.$^6$: **F02D 41/40**, F02D 41/22

(21) Application number: 97100258.9

(22) Date of filing: 09.01.1997

(84) Designated Contracting States:
**DE FR GB**

(30) Priority: **11.01.1996 JP 3204/96**

(71) Applicant: **TOYOTA JIDOSHA KABUSHIKI KAISHA**
**Aichi-ken (JP)**

(72) Inventor: **Itoh, Yoshiyasu**
**Toyota-shi, Aichi-ken 471 (JP)**

(74) Representative: **Tiedtke, Harro, Dipl.-Ing.**
**Patentanwaltsbüro**
**Tiedtke-Bühling-Kinne & Partner**
**Bavariaring 4**
**80336 München (DE)**

(54) **Fuel injection timing control apparatus for diesel engine**

(57)     Disclosed is an apparatus for controlling fuel injection timing in a diesel engine (2). The diesel engine (2) has an injection pump (1) for delivering a fuel under a high pressure and injection nozzles (4) for injecting the fuel pumped from the pump (1) into combustion chambers (44). A timer unit (26) which is attached to the injection pump (1) adjusts the timing of injecting the fuel from the injection nozzles (4). An electronic control unit (ECU: 71) computes a target injection timing depending on the operational state of the engine (2). The ECU (71) controls the timer unit (26) so that the actual injection timing coincides with the calculated target injection timing. A lift sensor (36) attached to each injection nozzle (4) detects the time at which the nozzle needle (113) is actually lifted as the actual valve opening timing. The ECU (71) computes the target nozzle valve opening timing depending on the operational state of the engine (2). The ECU (71) calculates the difference between the calculated target nozzle valve opening timing and the actual nozzle valve opening timing detected by the lift sensor (36). The ECU (71) corrects the target injection timing based on the difference only when the difference thus calculated is within a predetermined range.

Fig.10

EP 0 784 153 A2

## Description

## TECHNICAL FIELD

The present invention relates generally to a fuel injection timing control apparatus for a diesel engine, which is adapted to control the timing of injecting a fuel from fuel injection nozzles to combustion chambers. More particularly, the present invention relates to a fuel injection timing control apparatus which is provided with a timer unit that can change the timing of pumping the fuel to the injection nozzles and is adapted to perform feedback control of the timer unit so as to adjust the injection timing.

## RELATED BACKGROUND ART

Conventionally, a diesel engine is provided with a fuel injection pump for delivering a fuel under high pressure and fuel injection nozzles for injecting the fuel into combustion chambers of the engine. Each injection nozzle has a nozzle needle and a spring, which are accommodated in a housing. The injection pump supplies fuel at high pressure to the injection nozzles. In the injection nozzle, the nozzle needle closes an nozzle hole of the housing under the urging force of the spring when the pressure of the fuel supplied from the injection pump is low. The nozzle needle is lifted to open the nozzle hole when the fuel pressure overcomes the urging force of the spring. Thus, the pressurized fuel is injected through the nozzle hole into the combustion chamber. The timing that the fuel is injected is adjusted by controlling an injection timing control apparatus (timer unit) provided in the pump.

There are existing units for feedback-controlling the fuel injection timing. For example, in a first existing control unit, the timing that a fuel is injected from an injection nozzle is indirectly detected and the detection value is used as a parameter for controlling the actual injection timing. More specifically, in this control unit, a computer detects a certain position (e.g., a top dead center) in the rotational angle of a crankshaft of the diesel engine. The computer also detects a certain position in the rotational angle of a drive shaft of the injection pump. The computer, based on these two detection values, detects the phase that concerns the injection timing to be adjusted by the timer unit and estimates an actual injection timing based on the detected phase. The computer also calculates the target injection timing at the injection nozzle depending on the operational state of the diesel engine. The computer performs feedback control of the timer unit such that the actual injection timing coincides with the target injection timing.

Japanese Patent Publication No. Hei 2-47582 discloses another control unit (a second existing control unit) for feedback-controlling the fuel injection timing. This control unit directly detects the fuel injection timing and performs feedback control of the timer unit employing the detection value so as to adjust the injection timing. In this control unit, a nozzle lift sensor, which is attached to the injection nozzle, detects a lifting motion (valve opening timing) of the nozzle needle. A top dead center sensor provided in the diesel engine detects that a piston of a certain cylinder in the engine has reached the top dead center. The computer calculates the actual injection timing based on these two detection values. The computer calculates the target injection timing in accordance with the operational state of the diesel engine to be detected. The computer performs feedback control of the timer unit such that the actual injection timing coincides with the target injection timing.

However, in the first control unit described above, the computer estimates the actual injection timing without taking into account the lifting motion (valve opening timing) of the nozzle needle, which directly controls the injection timing. The computer then feedback-controls the timer unit based on the estimated value so as to adjust the injection timing. There is a fear that the nozzle valve opening pressure (the fuel pressure when the nozzle needle starts lifting to open the nozzle hole) varies due to, among other things, change in the urging force of the spring. Accordingly, if the valve opening pressure varies, the valve opening timing will be also varied, and the injection timing cannot be properly adjusted.

In the second control unit, the nozzle lift sensor detects the lifting motion (valve opening timing) of the nozzle needle. Accordingly, the drawback described above is solved. However, in the second control unit, there is another problem as described below.

More specifically, the detection of the lifting motion of the nozzle needle by the nozzle lift sensor is carried out by making a decision as to whether or not the lift amount of the nozzle needle has exceeded a predetermined threshold value. In this case, the threshold value should be set at a relatively small level so as to enhance the detection accuracy of the lift sensor. Thus, opening of the valve can be detected when the nozzle needle is lifted slightly. On the other hand, the timing of nozzle lift signals obtained each time the injection timing is calculated is liable to fluctuate. Accordingly, since the injection timing is feedback-controlled based on the nozzle lift signal, the difference between the target injection timing and the actual injection timing and the correction amount of the injection timing vary each time. Therefore command signals for advancing the actual injection timing and command signals for retarding it are frequently fed to the timer unit. Consequently, hunting is likely to occur in adjusting the injection timing, which is likely to lower the control accuracy in terms of convergency of the injection timing. On the other hand, when the threshold value is set at a high level, the variation in the individual lift sensors is liable to be reflected, leading to a fear of great variation in the injection timing among different engines.

## DISCLOSURE OF THE INVENTION

Accordingly, it is a primary objective of the present invention to provide a fuel injection timing control apparatus, in which a timer unit is feedback-controlled taking variations in the nozzle valve opening pressure for injection nozzles into consideration so as to adjust the fuel injection timing, and signals for changing the injection timing are sent less frequently to the timer unit to improve the accuracy of the control apparatus.

To achieve the foregoing and other objects and in accordance with the purpose of the present invention, a fuel injection timing control apparatus is provided for a diesel engine. The engine has at least one fuel injection nozzle for injecting fuel into at least one combustion chamber of the engine, and a fuel injection pump for supplying fuel to each injection nozzle under high pressure. Each injection nozzle includes a nozzle needle, a spring and a nozzle hole, wherein said nozzle needle closes the nozzle hole under the urging force of the spring when the pressure of the supplied fuel is low and wherein the nozzle needle moves to open the nozzle hole so as to inject fuel when the pressure of the supplied fuel overcomes the urging force of the spring. The apparatus has a timer unit for adjusting the timing of supplying fuel to each injection nozzle from the injection pump so as to adjust the timing of the fuel injection from the injection nozzle, a operating condition detecting device for detecting an operating condition of the engine, a timer state detecting device for detecting a functioning state of the timer unit, a timing detecting device for detecting a timing of the nozzle needle motion to inject fuel from the injection nozzle, a controller for controlling the timer unit based on the detected operating condition. The controller computes a target injection timing, and wherein the controller controls the timer unit such that the adjusted injection timing coincides with the computed target injection timing based on the detected functioning state of the timer unit. The controller computes a target motion timing of the nozzle needle. The apparatus characterized by that the controller computes a difference between the computed target motion timing of the nozzle needle and the detected motion timing of the nozzle needle. The controller corrects the computed target injection timing or the detected functioning state of the timer unit based on the computed difference when the difference is within a predetermined range.

## BRIEF DESCRIPTION OF THE DRAWINGS

The features of the present invention that are believed to be novel are set forth with particularity in the appended claims. The invention, together with the objects and advantages thereof, may best be understood by reference to the following description of the presently preferred embodiments together with the accompanying drawings in which:

FIGURE 1 is a schematic view showing a diesel engine and a fuel injection pump;

FIGURE 2 is a diagrammatic front view showing a pulser and an engine speed sensor;

FIGURE 3 is a cross-sectional view showing a fuel injection nozzle;

FIGURE 4 is a block circuit diagram showing the electrical constitution of an ECU;

FIGURES 5(a) to (e) are timing diagrams showing the relationship among a nozzle lift signal, an output signal of a nozzle lift sensor, fuel pressure in a high pressure chamber, a pump angle pulse and a crank angle pulse;

FIGURE 6 is a flow chart showing an actual nozzle lift timing computing routine;

FIGURE 7 is a graph showing functional data plotted by presetting the relationship between difference and correction value;

FIGURE 8 is a flow chart showing a routine of computing a nozzle lift correction term;

FIGURE 9 is a flow chart showing an injection timing controlling routine; and

FIGURE 10 is a graph showing functional data plotted by presetting the relationship among the engine speed, the nozzle valve opening pressure and actual nozzle lift timing.

## DESCRIPTION OF SPECIAL EMBODIMENT

The fuel injection timing control apparatus for a diesel engine according to the present invention will be described specifically by way of an embodiment referring to the attached drawings.

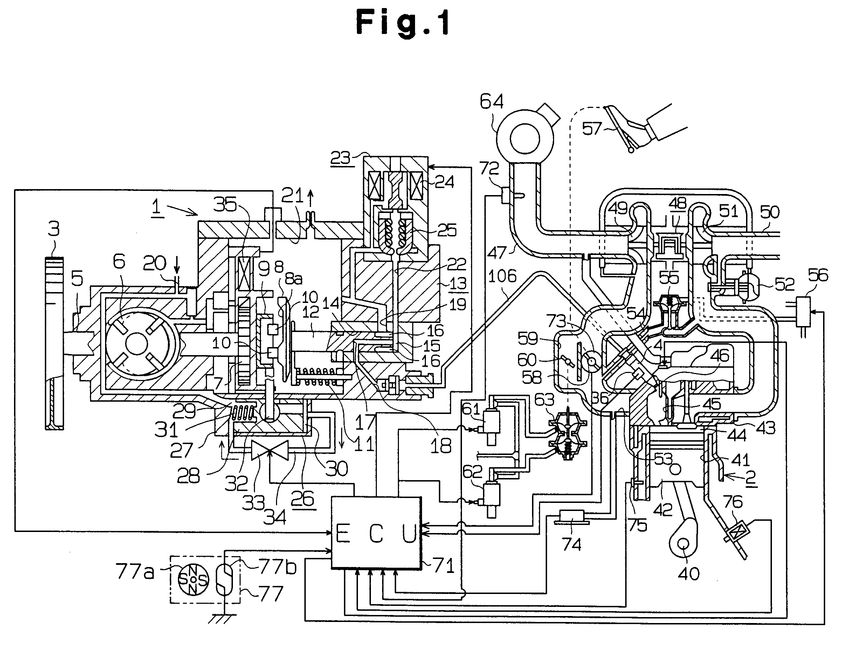

As shown in FIGURE 1, a diesel engine 2 loaded on a vehicle has a plurality of cylinders (four cylinders in this embodiment). This engine 2 has fuel injection nozzles 4 associated with the respective cylinders and a fuel injection pump 1 for supplying fuel to each injection nozzle 4. The injection pump 1, which is of distributor type, pumps the fuel to be distributed to each injection nozzle 4 under reciprocation of a rotating fuel compressing plunger 12. The injection pump 1 and each injection nozzle 4 are connected to each other by a fuel line 106 having a predetermined length.

The injection pump 1 includes a pump housing 13. A drive shaft 5 is rotatably supported by the housing 13, and a drive pulley 3 is fixed to one end (left end in FIGURE 1) of the shaft 5. A belt (not shown) wrapped around a crankshaft 40 of the engine 2 and the drive pulley 3 transmit the rotational force of the crankshaft 40 to the drive pulley 3.

The injection pump 1 is provided with a vane type fuel feed pump (shown in a 90° developed view in FIGURE 1) 6. The feed pump 6 located in the housing 13 is driven by the drive shaft 5. A disc-like pulser 7 attached to the proximal end (right end in FIGURE 1) of the drive shaft 5 has a plurality of teeth on its periphery. The proximal end of the drive shaft 5 is connected via a coupling (not shown) to a cam plate 8 fixed to the proximal end portion of the plunger 12.

A roller ring 9, which is located between the pulser 7 and the cam plate 8, rotates so as to change the fuel injection timing of the injection pump 1, i.e., the timing of injecting fuel from the injection nozzle 4. The cam plate 8 has a cam face 8a. The cam face 8a has the same number of recesses and ridges as that of the cylinders in the engine 2. The roller ring 9 has a plurality of cam rollers 10 attached to it. Each cam roller 10 opposes the cam face 8a. A spring 11 located in the housing 13 normally urges the cam plate 8 toward the cam roller 10.

The cam plate 8 and the plunger 12 rotate integrally with the rotation of the drive shaft 5. More specifically, the rotational force of the drive shaft 5 is transmitted via the coupling (not shown) to the cam plate 8. Thus, the cam plate 8 is engaged with the cam rollers 10 and rotates to be reciprocated a few times corresponding to the number of cylinders in the engine 2 in the horizontal direction in FIGURE 1. With the reciprocation of the cam plate 8, the plunger 12 rotates and reciprocates. In other words, when the ridges of the cam face 8a ride on the cam rollers 10, the plunger 12 is advanced (lifted); whereas when ridges roll off the cam rollers 10, the plunger 12 is retracted.

The distal end portion of the plunger 12 is inserted to a cylinder 14 defined in the housing 13. The space defined between the distal end face of the plunger 12 and the end of the cylinder 14 constitutes a high pressure chamber 15 for compressing the fuel to a high pressure level. A plurality of suction grooves 16 are defined on the outer circumference of the plunger 12 at the distal end portion, which serve to draw the fuel into the cylinder 14 through a suction port 19 defined in the housing 13. The number of suction grooves 16 corresponds to the number of cylinders in the engine 2. A distribution port 17 formed at the distal end portion of the plunger 12 distributes the fuel compressed in the high pressure chamber 15 to a plurality of distribution passages 18 defined in the housing 13.

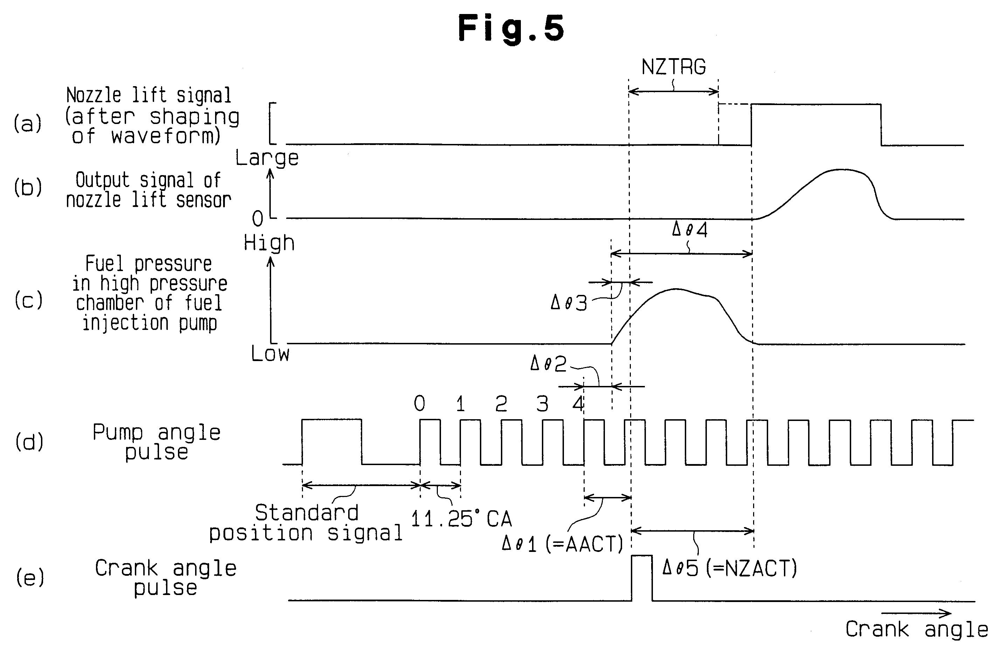

When the drive shaft 5 is rotated to actuate the feed pump 6, the fuel in a fuel tank (not shown) is supplied through a supply port 20 provided in the housing 13 to a fuel chamber 21. In the suction stroke where the pressure in the high pressure chamber 15 is reduced with the retraction of the plunger 12, one of the suction grooves 16 is communicated to the suction port 19. Thus, the fuel in the fuel chamber 21 is introduced to the high pressure chamber 15. Meanwhile, in the compression stroke where the pressure in the high pressure chamber 15 is increased with the advance of the plunger 12, the fuel compressed in the high pressure chamber 15 is pumped through the distribution passage 18 and the fuel line 106 to the injection nozzle 4. Change in the fuel pressure in the high pressure chamber 15 under reciprocation of the plunger 12 is shown in FIGURE 5(c).

As shown in FIGURE 1, a spill passage 22 for spilling out fuel is defined in the housing 13 so as to secure communication between the high pressure chamber 15 and the fuel chamber 21. A normally open electromagnetic spill valve 23 disposed in the spill passage 22 adjusts spilling of the fuel fed from the high pressure chamber 15. The electromagnetic spill valve 23 has a coil 24 and a valve body 25. In the electromagnetic spill valve 23, the valve body 25 opens the spill passage 22 when the coil 24 is not energized (OFF state) to allow the fuel in the high pressure chamber 15 to spill into the fuel chamber 21. When the coil 24 is energized (ON state), the spill passage 22 is closed with the valve body 25 to interrupt spilling of the fuel from the high pressure chamber 15 into the fuel chamber 21.

Accordingly, by changing the time of energizing the coil 24, the duration that the electromagnetic spill valve 23 is closed or opened is changed. Thus, the duration that the fuel is spilled from the high pressure chamber 15 to the fuel chamber 21 is adjusted. The electromagnetic spill valve 23 is opened when the fuel is injected from the injection nozzle 4 in the compression stroke of the plunger 12. Thus, the pressure of the fuel compressed in the high pressure chamber 15 is reduced to stop injection of the fuel from the injection nozzle 4. In other words, even when the plunger 12 is in the advancing stroke, the fuel pressure in the high pressure chamber 15 is not increased so long as the electromagnetic spill valve 23 is opened, so that no fuel is injected from the injection nozzle 4. The timing of closing and opening the electromagnetic spill valve 23 is adjusted while the plunger 12 is in the advancing stroke. Thus, the timing of completing fuel injection from the injection nozzle 4 is changed, and the amount of fuel to be injected from the injection nozzle 4 is adjusted.

A timer unit (shown in a 90° developed view in FIGURE 1) 26 attached to the bottom of the housing 13 changes the timing of injecting the fuel from the injection nozzle 4. The timer unit 26, so as to change the fuel injection timing, rotates the roller ring 9 to change its position with respect to the rotational direction of the drive shaft 5. Thus, the timing that the recesses and ridges of the cam face 8a engage with the cam rollers 10, i.e., the timing that the cam plate 8 and the plunger 12 are reciprocated, is changed.

The timer unit 26 which is driven by oil pressure is provided with a timer housing 27, a timer piston 28 and a timer spring 31. The piston 28 is located to reciprocate in the housing 27. In the housing 27, a low pressure chamber 29 (left end in FIGURE 1) and a pressure chamber 30 (right end in FIGURE 1) are defined at the ends of the piston 28. The low pressure chamber 29 is connected via a communicating passage 34 to the pressure chamber 30. The spring 31 arranged in the low pressure chamber 29 urges the piston 28 toward the pressure chamber 30. The piston 28 is connected to the roller ring 9 by a slide pin 32. The fuel compressed by the feed pump 6 is introduced as hydraulic fluid into the low pressure chamber 29.

The fuel introduced to the low pressure chamber 29 is then introduced through the communicating passage 34 to the pressure chamber 30. The position of the piston 28 in the housing 27 is determined by the balance between the fuel pressure in the low pressure chamber 29, the fuel pressure in the pressure chamber 30 and the urging force of the spring 31. When the position of the piston 28 is determined, the turning position of the roller ring 9 is determined via the slide pin 32. Thus, the timing that the plunger 12 is reciprocated by the cam plate 8 is determined.

A timing control valve (TCV) 33, which is located in the communicating passage 34, adjusts the fuel pressure acting upon the timer unit 26. The TCV 33, which is an electromagnetic valve, is duty-controlled. Intermittent ON-OFF signals, which are adjusted according to a predetermined duty ratio, are supplied to the TCV 33. Thus, valve travel of the TCV 33 is adjusted. Based on this adjustment of the valve travel, the pressure of the fuel to be introduced to the pressure chamber 30 is adjusted to change the timing of reciprocating the plunger 12. With this change, the timing of injecting the fuel from each injection nozzle 4 is adjusted.

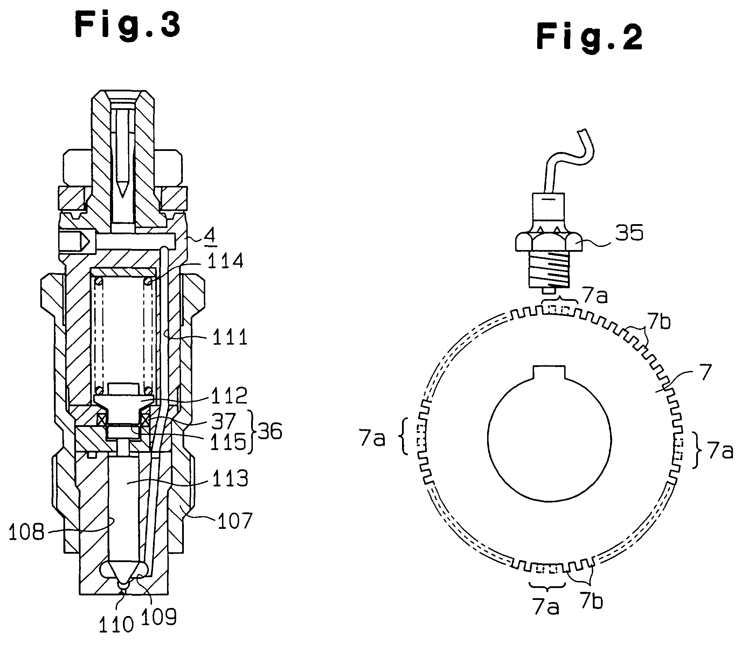

An engine speed sensor 35 is attached to the top of the roller ring 9 to oppose the outer circumference of the pulser 7. As shown in FIGURE 2, the pulser 7 has on its periphery a plurality of vacant portions 7a and a plurality of teeth 7b. The number of vacant portions 7a formed at equal angular intervals about the periphery of the pulser 7 corresponds to the number of cylinders in the engine 2 (four cylinders in this embodiment). The teeth 7b are formed at equal angular intervals between the vacant portions 7a. An electromagnetic pick-up coil constitutes the engine speed sensor 35. Each time a teeth 7b passes the engine speed sensor 35 under rotation of the pulser 7, the sensor 35 outputs a pulse signal.

The drive shaft 5 and the pulser 7 of the injection pump 1 are rotated integrally by the rotation of the crankshaft 40 of the engine 2. With the rotation of the pulsar 7, a series of pulse signals or pump angle signals are output from the engine speed sensor 35, as shown in FIGURE 5(d). In the series of pump angle pulses, the angular intervals between the pulse signals (11.25° CA; CA represents a crank angle) correspond to the intervals at which the teeth 7b of the pulser 7 pass the engine speed sensor 35. In the series of pump angle pulses, the angular intervals at which the reference position signals are output correspond to the intervals at which the vacant portions 7a of the pulsar 7 cross the engine speed sensor 35. It should be noted here that, for convenience' sake in description, output signals whose waveform is shaped are shown in FIGURE 5(d). Based on the series of pump angle pulses, the rotational speed of the drive shaft 5 of the injection pump 1 or the revolutions per unit time (engine speed) NE of the crankshaft 40 of the engine 2, can be detected.

The engine speed sensor 35 is integrated into the roller ring 9. Accordingly, the timing of the pump angle pulses to be output from the sensor 35 is not changed irrespective of the motion of the roller ring 9 operated by the timer unit 26. Thus, the timing of the pump angle pulses are not changed relative to the timing at which the plunger 12 is lifted.

As shown in FIGURE 1, the engine 2 has a plurality of cylinders 41, a plurality of pistons 42 and a cylinder head 43. The number of main combustion chambers 44 defined by the cylinders 41, the pistons 42 and the cylinder head 43 is equal to the number of cylinders of the engine 2. The main combustion chambers 44 communicate with subsidiary chambers 45, respectively, defined in the cylinder head 43. The injection nozzles 4 attached to the cylinder head 43 inject fuel into the respective subsidiary chambers 45.

As shown in FIGURE 3, each injection nozzle 4 has a housing 107. The housing 107 contains a bore 108, a fuel reservoir 109, a nozzle hole 110 and a fuel passage 111. A nozzle needle 113 slidably housed in the bore 108 has a spring retainer 112 at the upper end. A coil spring 114, which is disposed on the spring retainer 112 in a compressed state, normally urges the nozzle needle 113 in the direction of closing the nozzle hole 110 (downward in FIGURE 3). The high-pressure fuel supplied from the injection pump 1 to the injection nozzle 4 passes through the fuel passage 111 to be introduced to the fuel reservoir 109. The pressure of the fuel introduced to the fuel reservoir 109 acts upon the nozzle needle 113. When the fuel pressure overcomes the urging force of the coil spring 114, the nozzle needle 113 is pushed up. Thus, the nozzle hole 110 closed by the nozzle needle 113 is opened to permit fuel to be injected through the nozzle hole 110.

The nozzle needle 113 makes a vertical movement slightly after the fuel pressure in the high pressure chamber 15 of the injection pump 1 (or the fuel pressure in the fuel line 106 at the position closest to the injection pump 1) is changed. This is because the injection pump 1 and the injection nozzle 4 are connected to each other by the fuel line 106 having a certain length, and it takes some time until the fuel pressure in the high pressure chamber 15 is transmitted to each injection nozzle 4.

A nozzle lift sensor 36, which is attached to each injection nozzle 4, detects vertical movements of the nozzle needle 113. The lift sensor 36 has a reduced portion 115 and an electromagnetic pickup 37. The reduced portion 115 is formed at a part of the outer circumference of the spring retainer 112. The pickup 37 is disposed around the spring retainer 112. The pickup 37 detects displacement of the reduced portion 115 caused by a vertical movement of the nozzle needle 113, when fuel is injected from the injection nozzle 4, to output a wave-like signal as shown in FIGURE 5(b).

This signal is shaped by a waveform shaping circuit 95 (to be described later) to a rectangular wave as shown in FIGURE 5(a). When the output signal shown in FIGURE 5(b) exceeds a predetermined threshold value, a nozzle lift signal as shown in FIGURE 5(a) is output. The time at which the nozzle lift signal is output corresponds to the time at which the valve of the injection nozzle 4 is opened or the time at which the fuel injection from the injection nozzle 4 is started. As described above, the actual fuel injection timing can be detected by the nozzle lift sensor 36.

As shown in FIGURES 5(a) and (c), the angular interval after the fuel pressure in the high pressure chamber 15 of the injection pump 1 starts rising until a nozzle lift signal rises is to be expressed in terms of the crank angle $\Delta\theta4$. It should be noted here that the value of angular interval $\Delta\theta4$ is determined by the pressure (nozzle valve opening pressure) p where the nozzle needle 113 opens the valve and the engine speed NE, provided that the fuel line 106 has a certain length. The higher the nozzle valve opening pressure P or the engine speed NE, the larger the angular interval $\Delta\theta4$ becomes.

As shown in FIGURE 1, a glow plug 46 which is attached to each subsidiary chamber 45 heats the air introduced thereto so as to assist starting of the engine 2. A turbo charger 48, which is provided in the engine 2, has a compressor 49, a turbine 51 and a shaft connecting them together. The turbine 51, which is connected to an exhaust pipe 50, is rotated by the flow of exhaust gas discharged from the main combustion chamber 44 to the exhaust pipe 50. The compressor 49, which is attached to the intake pipe 47, is rotated based on the rotation of the turbine 51 to supercharge air introduced to the main combustion chamber 44. A waste gate valve 52, which is attached to the exhaust pipe 50, adjusts the pressure of air supercharged by the turbo charger 48.

An exhaust gas recirculating pipe (EGR pipe) 54 connected between the exhaust pipe 50 and the intake pipe 47 distributes a portion of the exhaust gas from the exhaust pipe 50 to the intake pipe 47 to be recirculated to the main combustion chamber 44. An EGR valve 55 provided in the EGR pipe 54 controls the amount of exhaust gas (EGR amount) flowing through the EGR pipe 54. A negative pressure to be selectively connected to a diaphragm chamber of the EGR valve 55 is controlled by a vacuum switching valve (VSV) 56. The valve travel of the VSV 56 is adjusted upon receipt of intermittent ON/OFF signals, which are controlled with a predetermined duty ratio. When the duty ratio of the signals is increased, the value of electric current supplied to the VSV 56 is increased, and the absolute value of the negative pressure to be supplied to the diaphragm chamber of the EGR valve 55 is increased. Thus, the value opening of the EGR pipe 54 is increased to increase the EGR amount.

A throttle valve 58, which is attached to the intake pipe 47 is selectively opened or closed with the movement of an acceleration pedal 57. A bypass passage 59 provided in the intake pipe 47 detours around the throttle valve 58. A bypass restrictor 60 located disposed in the bypass passage 59 is opened and closed by an actuator 63 having a dual diaphragm chamber. Operation of this actuator 63 is controlled by controlling two VSVs 61, 62. Opening and closing of the restrictor 60 is controlled depending on the operational state of the engine 2. For example, when the engine 2 is idling, the restrictor 60 is adjusted to a half-open state so as to reduce noises, vibration, etc. When the engine 2 is under normal operation, the restrictor 60 is adjusted to a full-open state. When the engine 2 is stopped, the restrictor 60 is adjusted to a full-closed state so as to stop the engine 2 smoothly.

An electronic control unit (ECU) 71 controls the electromagnetic spill valve 23, TCV 33, glow plug 46 and VSVs 56, 61, 62, respectively.

Various sensors are provided, in addition to the engine speed sensor 35 and the nozzle lift sensor 36, so as to detect the operational state of the engine 2. An air temperature sensor 72, located at the intake pipe 47 adjacent to an air cleaner 64, which detects the temperature (air temperature) THA of the air introduced to the intake pipe 47. An acceleration pedal angle sensor 73, located at the intake pipe 47, which detects the acceleration pedal angle ACCP corresponding to the load of the engine at the position where the throttle valve 58 is opened and closed. A manifold pressure sensor 74 disposed adjacent to the suction port 53 detects the manifold pressure VPIM of air supercharged by the turbo charger 48.

A coolant temperature sensor 75 provided in the engine 2 detects the temperature of a coolant (coolant temperature) THW flowing in the engine 2. A crank angle sensor 76 provided in the engine 2 outputs crank angle pulses as shown in FIGURE 5(e) in synchronization with the rotation of the crankshaft 40. In this embodiment, a crank angle pulse is output when the piston 42 in a certain cylinder is at the top dead center position.

A vehicle speed sensor 77 attached to a transmission (not shown) has a magnet 77a and a reed switch 77b. The magnet 77a is rotated based on the rotation of a transmission gear, whereby the reed switch 77b is intermittently ON/OFF operated to detect the speed SP of the vehicle.

The sensors 35, 36, 72 to 77, electromagnetic spill valve 23, TCV 33, glow plug 46 and VSVs 56, 61, 62 are connected to the ECU 71. The ECU controls, based on the signals from the sensors 35, 36, 72 to 77, the electromagnetic spill valve 23, TCV 33, glow plug 46 and VSVs 56, 61, 62, respectively.

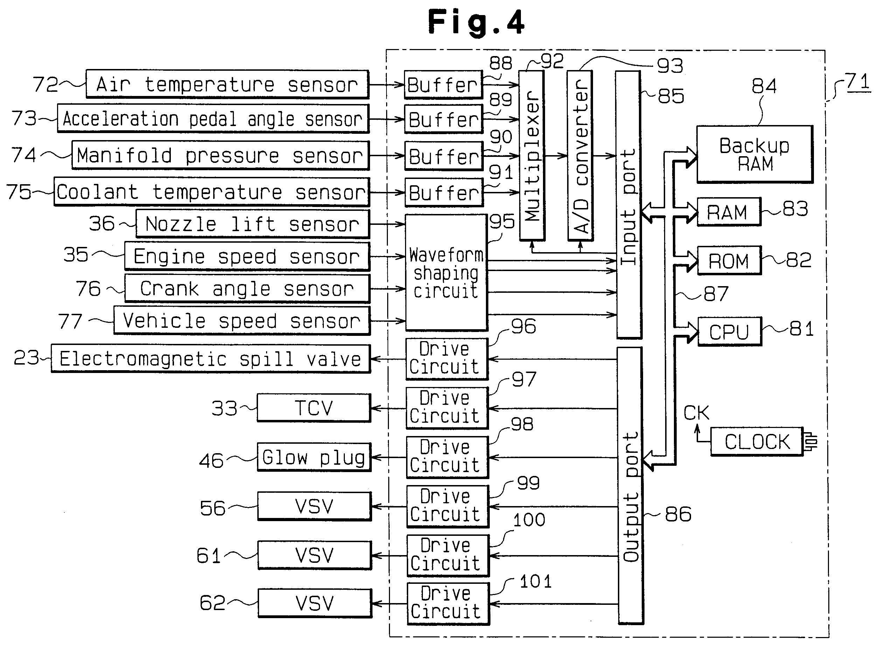

As shown in the block circuit diagram of FIGURE 4, the ECU 71 has a central processing unit (CPU) 81, a read-only memory (ROM) 82, a random access memory (RAM) 83 and a backup RAM 84. The CPU 81 executes operation and processing. The ROM 82 has predetermined control programs, and maps stored beforehand. The RAM 83 temporarily stores operational data of the CPU 81. The backup RAM 84 stores the data stored beforehand. The CPU 81, ROM 82, random access memory RAM 83 and backup RAM 84 are connected to an input port 85 and an output port 86 by a bus 87.

The air temperature sensor 72, acceleration pedal angle sensor 73, manifold pressure sensor 74 and coolant temperature sensor 75 are connected to the input port 85 via respective buffers 88, 89, 90, 91, a multiplexer 92 and an A/D converter 93. The engine speed sensor 35, nozzle lift sensor 36, crank angle sensor 76 and the vehicle speed sensor 77 are connected to the input port 85 via the waveform shaping circuit 95. The CPU 81 reads the detection signals from these sensors 35, 36, 72 to 77 via the input port 85.

The electromagnetic spill valve 23, TCV 33, glow plug 46 and VSVs 56, 61, 62 are connected to the output port 86 via driving circuits 96, 97, 98, 99, 100, 101, respectively. The CPU 81 controls the electromagnetic spill valve 23, TCV 33, glow plug 46 and VSVs 56, 61, 62 based on the input values read via the input port 85.

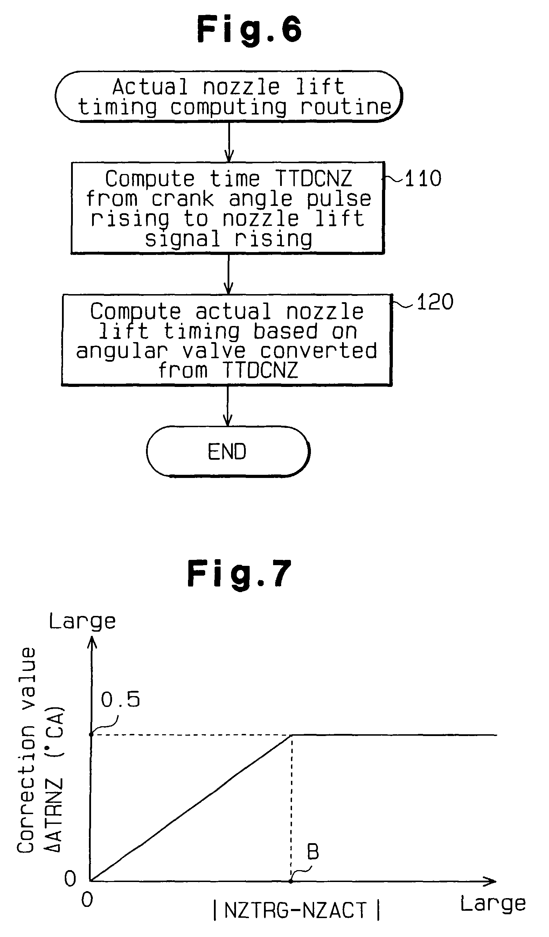

Next, the actions and effects of this embodiment will be described. The flow chart of FIGURE 6 shows one of the processes to be executed by the CPU 81, i.e., a routine for calculating the time (actual nozzle lift timing) NZACT at which the nozzle needle 13 of each injection nozzle 4 is actually lifted. The CPU 81 actuates this routine each time a nozzle lift signal is output from the nozzle lift sensor 36.

In Step 110, the CPU 81 calculates the time TTDCNZ from the rise of a crank angle pulse to the rise of a nozzle lift signal.

In Step 120, the CPU 81 converts the time TTDCNZ into an angular value, and the thus converted value is stored in the RAM 83 as the actual nozzle lift timing NZACT. To describe a method of converting time into an angle, for example, a series of continuous four pump angle pulses output before the nozzle lift signal rises are specified, and the time required for outputting these pulses is determined. More specifically, the time required until the crank angle CA is shifted by 45° is determined. Provided that this time is A1, the actual nozzle lift timing NZACT can be calculated according to the following equation.

$$NZACT = 45 * TTDCNZ/A1$$

After execution of processing of Step 120, the CPU 81 completes this routine. Thus, the actual nozzle lift timing NZACT associated with the nozzle needle 113 of the injection nozzle 4 is calculated based on the crank angle pulse and nozzle lift signal.

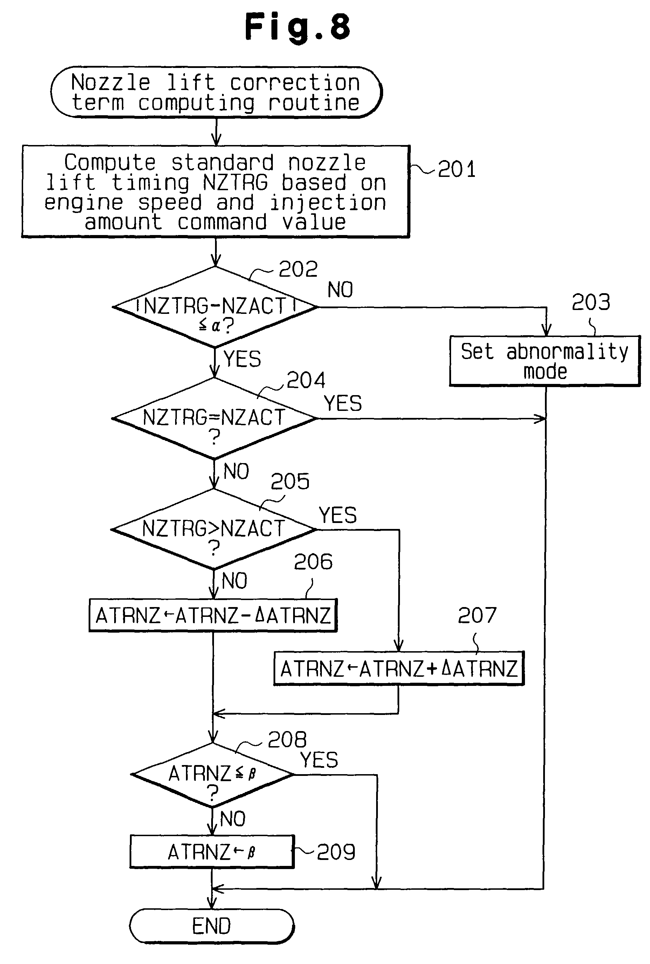

The flow chart of FIGURE 8 shows a routine for calculating a nozzle lift correction term ATRNZ so as to detect an abnormality in the nozzle valve opening pressure P. This correction term ATRNZ is employed for correcting a basic injection timing ABSE to be calculated in the following injection timing control routine. The CPU 81 actuates this routine at predetermined time intervals.

In Step 201, the CPU 81 reads the engine speed NE detected by the engine speed sensor 35 and an injection amount command value. The CPU 81 calculates a command value associated with the injection amount based on the operational sate of the engine 2, e.g., the engine speed NE, acceleration pedal angle ACCP, manifold pressure VPIM and air temperature THA according to another routine. The CPU 81 calculates a reference nozzle lift timing NZTRG conforming to the engine speed NE and injection amount command value by referring to predetermined functional data. The lift timing NZTRG corresponds to the target valve opening timing associated with the injection nozzle 4. Incidentally, the reference nozzle lift timing NZTRG may be calculated according to a preset operational expression instead of referring to the functional data.

In step 202, the CPU 81 calculates the difference between the reference nozzle lift timing NZTRG calculated in Step 201 and the actual nozzle lift timing NZACT calculated in Step 120. It is estimated whether the absolute value of difference is at a predetermined value α or lower, or whether the difference is within a predetermined range. The predetermined value α is used for estimating whether or not the nozzle valve opening pressure P in the injection nozzle 4 is normal. Here, a difference of about 1 to 2° CA is liable to occur between the actual nozzle lift timing NZACT and the reference nozzle lift timing NZTRG even when the injection nozzle 4 is operating properly and the nozzle valve opening pressure P is within a tolerable range. Accordingly, the predetermined value α is set at 5° CA with some allowance. The predetermined value α is determined to be suitable for the individual engine 2.

When the result of the decision in Step 202 is YES, i.e., when the absolute value of difference is 5° CA or smaller, it can be judged that the nozzle valve opening pressure P is within a suitable range and the injection nozzle 4 is functioning properly. Accordingly, the CPU 81 proceeds processing to Step 204. In Step 204, the CPU 81 makes decision whether or not the reference nozzle lift timing NZTRG coincides with the actual nozzle lift timing NZACT. When the result of this decision is YES, the CPU 81 terminates this routine.

Meanwhile, when the result of decision in Step 204 is NO (NZTRG ≠ NZACT), the CPU 81 calculates the nozzle lift correction term ATRNZ based on the difference between these two values NZTRG and NZACT in Steps 205 to 207.

More specifically, in Step 205, the CPU 81 makes decision whether or not the reference nozzle lift timing NZTRG is greater than the actual nozzle lift timing NZACT. When the result of this decision is YES (NZTRG > NZACT), the CPU 81 reads the nozzle lift correction term ATRNZ determined in the previous control cycle and adds the correction value ΔATRNZ thereto in Step 207. The CPU 81 sets the sum as a new nozzle lift correction term ATRNZ and proceeds processing to Step 208.

On the contrary, when the result of decision in Step 205 is NO (NZTRG ≦ NZACT), the CPU 81 reads the nozzle lift correction term ATRNZ calculated in the previous control cycle and subtracts the correction value ΔATRNZ therefrom in Step 206. The CPU 81 sets the difference as a new nozzle lift correction term ATRNZ and proceeds processing to Step 208.

The correction value ΔATRNZ in Steps 206, 207 is obtained, for example, by referring to functional data plotted in the graph as shown in FIGURE 7. In this functional data, the relationship of the absolute value of difference between the reference nozzle lift timing NZTRG and the actual nozzle lift timing NZACT with the correction value ΔATRNZ is established. Specifically, as shown in FIGURE 7, in the area defined by the relationship between the absolute value of difference and the correction value ΔATRNZ, a region where the absolute value is smaller than a predetermined value B is specified. In the thus specified region, the correction value ΔATRNZ increases with the increase of the absolute value. In the region where the absolute value is equal to or greater than the predetermined value B, the correction value ΔATRNZ assumes a substantially constant level (e.g., 0.5° CA) irrespective of the absolute value.

In Step 208, the CPU 81 makes decision whether or not the nozzle lift correction term ATRNZ determined in Step 206 or 207 is equal to or smaller than a predetermined value β. The predetermined value β limits the nozzle lift correction term ATRNZ in an injection timing control routine to be described later such that the target injection timing ATRG may not be changed greatly by the nozzle lift correction term ATRNZ. In this embodiment, the predetermined value β is set at 2° CA. The predetermined value β is preferably chosen to be within the injection timing that may change between individual engines depending on the variation in the nozzle valve opening pressure P.

When the result of the decision in Step 208 is YES (ATRNZ $\leqq$ β), the CPU 81 terminates the routine. When the result of decision in Step 208 is NO (ATRNZ > β), the CPU 81 sets the predetermined value β as the nozzle lift correction term ATRNZ in Step 209. As described above, the nozzle lift correction term ATRNZ is restricted to be within the range of 2° CA by executing processing in Steps 208 and 209. In other words, in the state where the nozzle valve opening pressure P is within the normal range and where the injection timing is feedback controlled, the nozzle lift correction term ATRNZ is restricted not to exceed 2° CA.

If the decision in Step 202 is NO, i.e., when the absolute value of difference is greater than the predetermined value α (= 5° CA), the nozzle valve opening pressure P is liable to deviate greatly from the proper range due to fatigue or breakage of the coil spring 114 because of deterioration with time. In this embodiment, the CPU 81 finds an abnormality in the nozzle valve opening pressure P, and in the injection nozzle 4 and sets an abnormality mode in Step 203 to terminate this routine.

Contents of the abnormality mode include display of abnormality in the injection nozzle 4 by an alarm lamp and storage of the abnormality code in the backup RAM 84. The abnormality code stored in the backup RAM 84 can be read from it at checking of the vehicle.

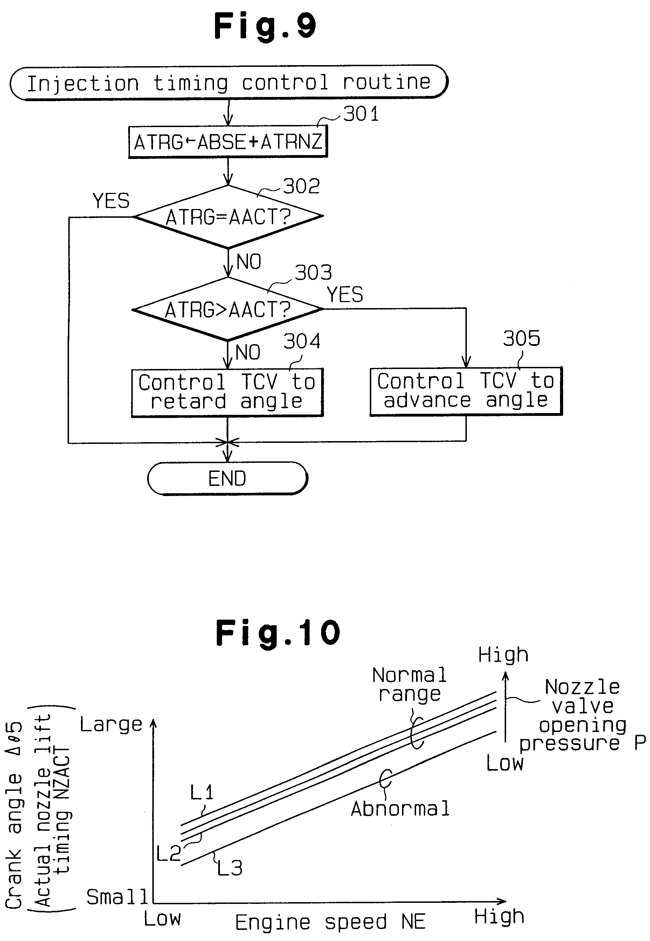

The flow chart of FIGURE 9 shows a routine for feedback controlling the fuel injection timing. The CPU 81 actuates this routine at predetermined time intervals.

In Step 301, the CPU 81 calculates the target injection timing ATRG. The CPU 81 calculates the basic injection timing ABSE conforming to the engine speed NE and the injection amount command value by referring to the predetermined functional data. Thus, the CPU 81 calculates the basic injection timing ABSE where fuel is to be injected from the injection nozzle 4 depending on the operational state of the engine 2. Further, the CPU 81 reads the nozzle lift correction term ATRNZ calculated in the nozzle lift correction term computing routine. The CPU 81 adds the nozzle lift correction term ATRNZ to the basic injection timing ABSE, and sets the sum as the target injection timing ATRG. By adding the nozzle lift correction term ATRNZ to the basic injection timing ABSE as described above, a target injection timing ATRG in which change in the injection timing attributed to variation in the nozzle valve opening timing is taken into consideration can be obtained.

In Step 302, the CPU 81 makes decision whether or not the advance angle AACT showing the operational state of the timer unit 26 coincides with the target injection timing ATRG calculated in Step 301. The CPU 81 calculates the advance angle AACT in accordance with another routine. This advance angle AACT reflects the phase difference between the crank angle pulse shown in FIGURE 5(e) and the predetermined pump angle pulse shown in FIGURE 5(d). When the result of decision in Step 302 is YES (ATRG = AACT), the CPU 81 as such terminates this routine.

On the contrary, when the result of decision in Step 302 is NO (ATRG ≠ AACT), the CPU 81 makes decision whether or not the target injection timing ATRG is greater than the advance angle AACT in Step 303. If the result of decision is NO, the CPU 81 controls the TCV 33 toward the retard angle side in Step 304; whereas if the result of decision is YES, the CPU 81 controls the TCV 33 toward the advance angle side in Step 305. Namely, the CPU 81 performs duty ratio control of the TCV 33 such that the advance angle AACT may coincide with the target injection timing ATRG. After execution of processing in Step 304 or 305, the CPU 81 completes this routine. Thus, the CPU 81 controls the timer unit 26 under monitoring of the action thereof based on the pump angle pulse and crank angle pulse such that the injection timing may coincide with the target injection timing ATRG.

As described above, according to this embodiment, the actual lifting motion of the nozzle needle 113 in the injection nozzle 4 is taken into consideration in performing feedback control of fuel injection timing. Accordingly, even if there is variation in the nozzle valve opening pressure P of the injection nozzle 4, change in the injection timing dependent on the variation in the nozzle valve opening pressure P can be corrected to a small value within the range of 2° CA by feedback-controlling the timer unit 26 so long as the nozzle valve opening pressure is within the normal range. This enables accurate control of the timer unit 26 such that the actual fuel injection timing coincides with the injection timing suitable for the operational state of the engine 2. Thus, compared with the prior art where feedback control of the fuel injection timing is carried out based on the pump angle pulse and crank angle pulse only, the accuracy of controlling the fuel injection timing in this embodiment is improved.

In this embodiment, feedback control of the fuel injection timing is carried out based on the target injection timing ATRG and the advance angle AACT of the timer unit 26. The target injection timing ATRG is corrected only when the difference between the reference nozzle lift timing NZTRG and the actual nozzle lift timing NZACT is within the predetermined range ($\pm$ 5° CA). Accordingly, such correction is not executed if the actual nozzle lift timing NZACT to be detected deviates greatly from the standard timing (deviated from the range described above) due to a drop in the nozzle valve opening pressure P. As described above, feedback control of the fuel injection timing is performed only in the narrow range, and thus accuracy of the actual injection timing (nozzle valve opening timing) is improved within a tolerable normal range of variation. In this embodiment, unlike the prior art in which the fuel injection timing is feedback controlled based on the nozzle lift signal only, the actual injection timing is hardly affected by the variation in the nozzle lift signals detected each time. This embodiment enables feedback control of the fuel injection timing with respect to an average range of fluctuation in the nozzle lift signals.

In this embodiment, an abnormality mode is set when the difference between the reference nozzle lift timing NZTRG and the actual nozzle lift timing NZACT deviates from the above-described range, which is detected as an abnormality in the nozzle opening pressure P of the injection nozzle 4. If the urging force of the coil spring 114 is changes greatly due to deterioration with time, breakage, etc., the nozzle valve opening pressure P of the injection nozzle 4 will greatly deviate from the normal value. In this case, such abnormality in the nozzle opening pressure P can be detected during control of fuel injection timing. Accordingly, it is possible to readily cope with such abnormality.

FIGURE 10 shows relationship among the engine speed NE, the nozzle valve opening pressure P and the angle (actual nozzle lift timing NZACT) from the rise of crank angle pulse to the rise of the nozzle lift signal. FIGURE 10 is obtained based on the relationship among the signals shown in FIGURE 5 (a) to (e).

More specifically, in order to distinguish the individual pump angle pulses shown in FIGURE 5(d), the first signal issued immediately after the reference position signal is defined as a pump pulse No. 0, and the following signals are defined successively as No. 1, No. 2, No. 3 ... signals. The position of the timer piston 28 in the timer unit 26 is fixed and the crank angle $\Delta\theta 1$ (advance angle AACT) from the rise of the pump angle pulse No. 4 to the rise of the crank angle pulse is constant. The crank angle $\Delta\theta 2$ from the rise of the pump angle pulse No. 4 to the start of rising in the internal fuel pressure of the high pressure chamber 15 in the injection pump 1 is adjusted in each pump 1 in manufacturing an engines 2. This is because feedback control of the fuel injection timing may become difficult if the pulser 7 and the rotational speed sensor 35 are assembled into the injection pump 1 with their rotational phases out of position. Accordingly, the crank angle $\Delta\theta 2$ is regarded to be set at a fixed level by such adjustment.

Since the crank angles $\Delta\theta 1$ and $\Delta\theta 2$ are both fixed, the crank angle $\Delta\theta 3$ from the start of rising in the fuel pressure to the rise of the crank angle pulse is constant. Meanwhile, as described above, the crank angle $\Delta\theta 4$ varies depending on the engine speed NE and the nozzle valve opening pressure P. Accordingly, the difference of the crank angle $\Delta\theta 4$ minus the crank angle $\Delta\theta 3$ (constant value), i.e., the crank angle $\Delta\theta 5$ from the rise of the crank angle, pulse to the rise of the nozzle lift signal shows a tendency like the crank angle $\Delta\theta 4$. Thus, as also shown in FIGURE 10, the crank angle $\Delta\theta 5$ is determined by the nozzle valve opening pressure P and the engine speed NE. The higher the nozzle valve opening pressure P or the engine speed NE, the greater the crank angle $\Delta\theta 5$.

In FIGURE 10, it should be appreciated that the relationship between the engine speed NE and the crank angle $\Delta\theta 5$ (actual nozzle lift timing NZACT) when the nozzle valve opening pressure P is at a standard level (e.g., 150 Kg/cm$^2$) is expressed by characteristic lines L1 to L3. In this embodiment, for example, provided that the crank angle $\Delta\theta 5$ (actual nozzle lift timing NZACT) is present in the area defined between the characteristic lines L1 and L2 when the nozzle valve opening pressure P is within a predetermined range (normal range) including the standard value. In this case, feedback control of fuel injection timing is performed taking the actual nozzle lift timing NZACT into consideration. Meanwhile, when the nozzle valve opening pressure P has dropped to deviate from the normal range, for example, when the crank angle $\Delta\theta 5$ (actual nozzle lift timing NZACT) is present on the characteristic line L3 deviated from the area defined between the characteristic lines L1 and L2, this is detected as abnormality in the nozzle valve opening pressure P, and the abnormality mode is set.

This embodiment enjoys the following characteristics in addition to those described above. In this embodiment, the value of the correction term ATRNZ is limited by guarding the nozzle lift correction term ATRNZ (Steps 208, 209). Accordingly, the target injection timing ATRG can be changed only within the range in which it can change depending on the variation in the nozzle valve opening pressure.

In this embodiment, the nozzle lift correction term ATRNZ is changed depending on the absolute value of the difference between the reference nozzle lift timing NZTRG and the actual nozzle lift timing NZACT using the map shown in FIGURE 7. When the absolute value is small, the nozzle lift correction term ATRNA is set at a small value (Steps 206, 207). Accordingly, the target injection timing ATRG can be corrected by the nozzle lift correction term ATRNZ, which is a value corresponding to the level of variation in the nozzle valve opening timing.

In this embodiment, the nozzle lift sensor 36 for detecting the lift amount of the nozzle needle 113 is employed so as to detect the actual nozzle valve opening timing. Accordingly, the actual valve opening timing of the nozzle needle 113 can be accurately detected compared with the case where other means are employed.

Although only one embodiment of the present invention has been described herein, it should be apparent to those skilled in the art that the present invention may be embodied in many other specific forms without departing from the spirit or scope of the invention. Particularly, it should be understood that the present invention may be embodied in the following modes.

In the foregoing description, when the result of decision in Step 202 in the routine shown in FIGURE 8 is NO, it is immediately decided in Step 203 that there is an abnormality in the nozzle valve opening pressure P, and the abnormality mode is set. Instead, the abnormality mode may be designed to be set in Step 203 when the state where the negative result of decision is continued over some period of time. In other words, the duration of the state where the absolute value of the difference ($|NZTRG - NZACT|$) in Step 202 exceeds the predetermined value $\alpha$ is measured. When the duration is shorter than a predetermined time, setting of the abnormality mode is prohibited. Thus, the decision of abnormality and the abnormality mode setting can be performed using only suitable detection signals free from unsuitable detection signals such as noises and temporary contact failure.

Other instruments for detecting the actual nozzle valve opening timing may be used so long as they can detect the valve opening timing of the injection nozzle 4. The nozzle lift sensor 36 may be replaced, for example, by a pressure sensor for detecting the pressure of fuel pumped from the injection pump 1 to the injection nozzle 4. In this case, the pressure sensor may be located in the injection nozzle 4 or in the fuel line 106.

In the foregoing description, the target injection timing ATRG is corrected so that variation in the nozzle valve opening timing caused by the variation in the nozzle valve opening pressure may be reflected on the feedback control of the fuel injection timing. Instead, the advance angle AACT of the timer unit 26 may be designed to be corrected. In this case, the correction term ATRNZ is subtracted from the advance angle AACT instead of performing the processing of Step 301 in the injection timing control routine. Thus, similar effects to those in the foregoing embodiment can be obtained.

Steps 206 and 207 in the routine shown in FIGURE 8 employ the correction value ΔATRNZ which changes depending on the absolute value of the difference between the reference nozzle lift timing NZTRG and the actual nozzle lift timing NZACT. However, the correction value ΔATRNZ may be fixed at a certain level. In this case, since the nozzle lift correction term ATRNZ is restricted to the predetermined value $\beta$ (= 2° CA), the correction value ΔATRNZ is preferably set at about 0.5° CA at the maximum.

When the abnormality mode is set in Step 203 of the routine shown in FIGURE 8, a buzzer may be actuated in another routine based on the abnormality mode in stead of lighting the alarm lamp. Alternatively, diagnosis data corresponding to the abnormality mode may be stored in the backup RAM 84 so that they can be read during inspections or repair.

Therefore, the present examples and embodiment are to be considered as illustrative and not restrictive, and the invention is not to be limited to the details given herein, but may be modified within the scope of the appended claims.

Disclosed is an apparatus for controlling fuel injection timing in a diesel engine (2). The diesel engine (2) has an injection pump (1) for delivering a fuel under a high pressure and injection nozzles (4) for injecting the fuel pumped from the pump (1) into combustion chambers (44). A timer unit (26) which is attached to the injection pump (1) adjusts the timing of injecting the fuel from the injection nozzles (4). An electronic control unit (ECU: 71) computes a target injection timing depending on the operational state of the engine (2). The ECU (71) controls the timer unit (26) so that the actual injection timing coincides with the calculated target injection timing. A lift sensor (36) attached to each injection nozzle (4) detects the time at which the nozzle needle (113) is actually lifted as the actual valve opening timing. The ECU (71) computes the target nozzle valve opening timing depending on the operational state of the engine (2). The ECU (71) calculates the difference between the calculated target nozzle valve opening timing and the actual nozzle valve opening timing detected by the lift sensor (36). The ECU (71) corrects the target injection timing based on the difference only when the difference thus calculated is within a predetermined range.

## Claims

1. A fuel injection timing control apparatus for a diesel engine (2), said engine (2) having at least one fuel injection nozzle (4) for injecting fuel into at least one combustion chamber (44, 45) of the engine (2), and a fuel injection pump (1) for supplying fuel to each injection nozzle (4) under high pressure, wherein each injection nozzle (4) includes a nozzle needle (113), a spring (114) and a nozzle hole (110), wherein said nozzle needle (113) closes the nozzle hole (110) under the urging force of the spring (114) when the pressure of the supplied fuel is low and wherein the nozzle needle (113) moves to open the nozzle hole (110) so as to inject fuel when the pressure of the supplied fuel overcomes the urging force of the spring (114), said apparatus having a timer unit (26) for adjusting the timing of supplying fuel to each injection nozzle (4) from the injection pump (1) so as to adjust the timing of the fuel injection from the injection nozzle (4), a operating condition detecting device (35, 73, 74, 75) for detecting an operating condition of the engine (2), a timer state detecting device (35, 76) for detecting a functioning state of the timer unit (26), a timing detecting device (36) for detecting a timing of the nozzle needle motion to inject fuel from the injection nozzle (4), a controller (71) for controlling the timer unit (26) based on the detected operating condition, wherein the controller (71) computes a target injection timing, and wherein the controller (71) controls the timer unit (26) such that the adjusted injection timing coincides with the computed target injection timing based on the detected functioning state of the timer unit (26), and wherein the controller (71) computes a target motion timing of the nozzle needle (113), said apparatus characterized by that the controller (71) computes a difference between the computed target motion timing of the nozzle needle (113) and the detected motion timing of the nozzle needle (113), and wherein the controller (71) corrects the computed target injection timing or the detected functioning state of the timer unit (26) based on the computed difference when the difference is within a predetermined range.

2. The apparatus according to Claim 1, characterized by that the controller (71) computes a correction value in accordance with the computed difference when the difference is within a predetermined range and corrects the computed target injection timing based on the computed correction value.

3. The apparatus according to Claim 2, characterized by that the controller (71) restricts the computed difference to a predetermined value when the correction value is larger than the predetermined value.

4. The apparatus according to Claims 1, 2, or 3, characterized by that the controller (71) determines that the injection nozzle (4) is abnormal when the computed difference is out of the predetermined range.

5. The apparatus according to Claims 1, 2, or 3, characterized by that the controller (71) measures a time period during which the computed difference is out of the predetermined range and determines that the injection nozzle (4) is abnormal when the measured time period exceeds a predetermined reference value.

6. The apparatus according to Claims 4 or 5, further characterized by a warning device for warning of an abnormality of the injection nozzle (4) when the controller (71) determines the abnormality.

7. The apparatus according to Claims 4 or 5, further characterized by a backup memory (84) for storing a abnormality code when the controller (71) determines a abnormality of the injection nozzle (4).

8. The apparatus according to any one of the preceding Claims, characterized by that the engine (2) has a plurality of cylinders (44,45) and one injection nozzle (4) is provided with each cylinder (44, 45).

9. The apparatus according to Claim 8, characterized by that each injection nozzle (4) is connected with an associated fuel line (106), and wherein the injection pump (1) includes a plunger (12) capable of rotating and reciprocating to distribute fuel to each injection nozzle (4) through each fuel line (106).

10. The apparatus according to Claim 9, characterized by that the timer unit (26) varies the timing of the supplying of fuel to each injection nozzle (26) from the injection pump (1) to vary a timing of the plunger reciprocating.

11. The apparatus according to any one of the preceding Claims characterized by that the timer state detecting device includes a first sensor (35) to detect a rotational phase of the engine (2) and a second sensor (76) to detect a reciprocating phase of the plunger (12), wherein a relationship between the rotational phase and the reciprocating phase indicates the functioning state of the timer unit (26).

12. The apparatus according to any one of the preceding Claims characterized by that the operating condition detecting device includes a engine sensor (35) to detect the rotational speed of the engine (2), a load sensor (73) to detect the engine load, a pressure sensor (74) to detect the pressure of air drawn into the combustion chamber (44) and a temperature sensor (75) to detect the temperature of the engine (2).

13. The apparatus according to any one of the preceding Claims characterized by that the timing detecting device includes a lift sensor (36) to detect a needle motion of the injection nozzle (4).

14. The apparatus according to any one of the preceding Claims characterized by that the controller forms part of an electronic control unit (71) having an input signal circuit (85, 88 - 93, 95), a memory (82, 83, 84), an operation circuit (81) and an output signal circuit (86, 96 - 101).

Fig.1

# Fig.3

# Fig.2

EP 0 784 153 A2

# Fig.4

72 — Air temperature sensor → Buffer 88
73 — Acceleration pedal angle sensor → Buffer 89
74 — Manifold pressure sensor → Buffer 90
75 — Coolant temperature sensor → Buffer 91
36 — Nozzle lift sensor
35 — Engine speed sensor
76 — Crank angle sensor → Waveform shaping circuit 95
77 — Vehicle speed sensor
23 — Electromagnetic spill valve ← Drive Circuit 96
33 — TCV ← Drive Circuit 97
46 — Glow plug ← Drive Circuit 98
56 — VSV ← Drive Circuit 99
61 — VSV ← Drive Circuit 100
62 — VSV ← Drive Circuit 101

Multiplexer 92
A/D converter 93
Input port 85
Output port 86
87

Backup RAM 84
RAM 83
ROM 82
CPU 81

CK
CLOCK

71

EP 0 784 153 A2

# Fig.5

(a) Nozzle lift signal (after shaping of waveform)

(b) Output signal of nozzle lift sensor

(c) Fuel pressure in high pressure chamber of fuel injection pump

(d) Pump angle pulse

(e) Crank angle pulse

NZTRG

Large

0

High

$\Delta\theta4$

$\Delta\theta3$

Low

$\Delta\theta2$

0 1 2 3 4

Standard position signal

11.25° CA

$\Delta\theta1$ (=AACT)

$\Delta\theta5$ (=NZACT)

Crank angle

EP 0 784 153 A2

# Fig.6

```
   ┌─────────────────────────┐
   │    Actual nozzle lift    │
   │ timing computing routine │
   └─────────────────────────┘
                │
                ▼
   ┌─────────────────────────┐
   │   Compute time TTDCNZ    │~110
   │  from crank angle pulse  │
   │  rising to nozzle lift   │
   │       signal rising      │
   └─────────────────────────┘
                │
                ▼
   ┌─────────────────────────┐
   │   Compute actual nozzle  │~120
   │    lift timing based on  │
   │ angular valve converted  │
   │       from TTDCNZ        │
   └─────────────────────────┘
                │
                ▼
          ┌───────────┐
          │    END    │
          └───────────┘
```

# Fig.7

# Fig.8

Nozzle lift correction
term computing routine

Compute standard nozzle
lift timing NZTRG based on
engine speed and injection
amount command value $\sim$201

202

|NZTRG−NZACT|
$\leq \alpha$?

NO

203

Set abnormality
mode

YES

204

NZTRG=NZACT
?

YES

NO

205

NZTRG>NZACT
?

YES

NO

206

ATRNZ←ATRNZ−ΔATRNZ

207

ATRNZ←ATRNZ+ΔATRNZ

208

ATRNZ$\leq \beta$
?

YES

NO

ATRNZ←$\beta$ $\sim$209

END

# Fig.9

Injection timing control routine

ATRG←ABSE+ATRNZ  ~301

ATRG=AACT?  ~302  YES

NO

ATRG>AACT?  ~303  YES

NO  304

Control TCV to retard angle

305

Control TCV to advance angle

END

# Fig.10

Crank angle Δø5
(Actual nozzle lift timing NZACT)

Large

Small

Low        Engine speed NE        High

L1
L2
L3

Normal range

Abnormal

High
Low

Nozzle valve opening pressure P